# EUROPEAN PATENT APPLICATION

(11) **EP 1 385 110 A2**
(43) Date of publication of application: **28.01.2004**
(21) Application number: 03016430.5
(22) Date of filing: 21.07.2003
(51) Int. Cl.: G06F 17/60

(54) **Method and system for managing long running transactions**

(30) Priority: 19.07.2002 US 397233 P; 18.07.2003 US 623208
(71) Applicant: MICROSOFT CORPORATION, Redmond, WA 98052 (US)
(72) Inventor: Brookins, Timothy J., West Fargo, North Dakota 58078 (US)
(74) Representative: Grünecker, Kinkeldey, Stockmair & Schwanhäusser Anwaltssozietät

(57) **Abstract**

A method and system for managing long-running transactions using business activities. In accordance with an aspect of the invention, one or more business activities can include business operations that span more than one physical database. Business activities are related to a logical transaction such that transaction management is effected for transactions that span multiple physical databases.

## Description

### BACKGROUND OF THE INVENTION

The present invention relates to computerized transaction management. More specifically the present invention relates to a method and system that manages long-running computerized transactions.

One of the most fundamental concepts in computerized transaction processing design is the "unit of work" Units of work typically implement ACID semantics. ACID brings together the concepts of "Atomic", "Consistent", "Isolated", and "Durable". A system that totally implements an ACID transaction model allows the programmer to essentially ignore multi-user issues. The ACID behaviors of the system ensure that the code will always execute as though it was the only user in the system.

While ACID behavior makes the task of creating business logic simpler, it comes at a scalability cost. The main benefit of ACID (makes it look single user) in many cases does make the system single user. For example, strict ACID semantics. require that any piece of data which is even referenced by business logic must be made single user for the duration of the processing (Repeatable Read Isolation).

Commercially available SQL Servers have supported a unit of work (database transactions) which implements ACID semantics for many years. Embodiments of the present invention do not attempt to document a new design for SQL Server transactions. However, business applications have needs for units of work which are much longer than physical database transactions would support. Thus, there is a need to build an infrastructure to support logical units of works which are capable of spanning multiple physical database transactions.

### SUMMARY OF THE INVENTION

A method and system for managing long-running transactions using business activities. In accordance with an aspect of the invention, one or more business activities can include business operations that span more than one physical database. Business activities are related to a logical transaction such that transaction management is effected for transactions that span multiple physical databases.

### BRIEF DESCRIPTION OF THE DRAWINGS

Fig. 1 is a diagrammatic view of a computing environment in which embodiments of the invention are useful.
Figs. 2 and 3 are block diagrams of a software environment in which embodiments of the present invention can be used.
Fig. 4 is a diagrammatic view illustrating relationships between business activity consumers, sagas, and business activities, in accordance with an embodiment of the present invention.
Fig. 5 is a diagrammatic view of a programming model illustrating aspects of the invention and whether they are preferably executed on a client or a server.
Fig. 6 is a diagrammatic view of an emissary-approach to a disconnected model illustrating entity persistence occurring on a server.
Fig. 7 is a diagrammatic view of an entity abort for connected entities.
Fig. 8 is a diagrammatic use case of an entity calling discarding an entity without calling abort.
Fig. 9 is a diagrammatic view of a use case where server-side entity persistence fires an event that instantiates a server-side entity.
Fig. 10 is a diagrammatic view of a use case showing how activities executed during the server-side persistence of an entity compose together.
Fig. 11 is a diagrammatic view of a use case where an entity is persisted during activity execution.
Fig. 12 is a diagrammatic view of a use case where code running in an event handler sequentially updates an entity and then later calls an activity.
Figs. 13 and 14 illustrate use cases contrasting a design choice of using discrete logs, or using a parent log only.
Fig. 15 is a diagrammatic view illustrating a child activity running in its parent's context.
Fig. 16 is a diagrammatic view of a BusinessActivity subsystem in accordance with an embodiment of the present invention.
Fig. 17 is a diagrammatic view of a SagaManager subsystem in accordance with an embodiment of the present invention.
Fig. 18 is a diagrammatic view of a ActivityManagement subsystem in accordance with an embodiment of the present invention.

### DETAILED DESCRIPTION OF ILLUSTRATIVE EMBODIMENTS

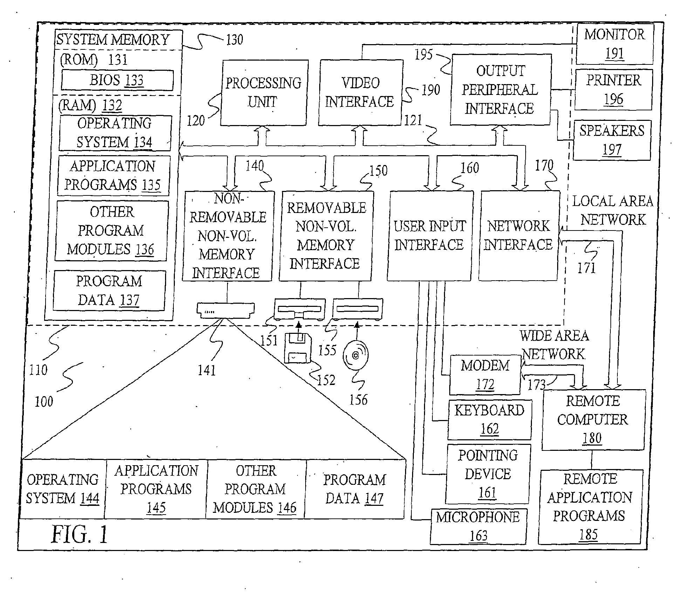

Fig. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general-purpose computing device in the form of a computer 110. Components of computer 110 may include, but are not limited to, a central processing unit 120, a system memory 130, and a system bus 121 that couples various system components including the system memory to the processing unit 120.

The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM. 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port, or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

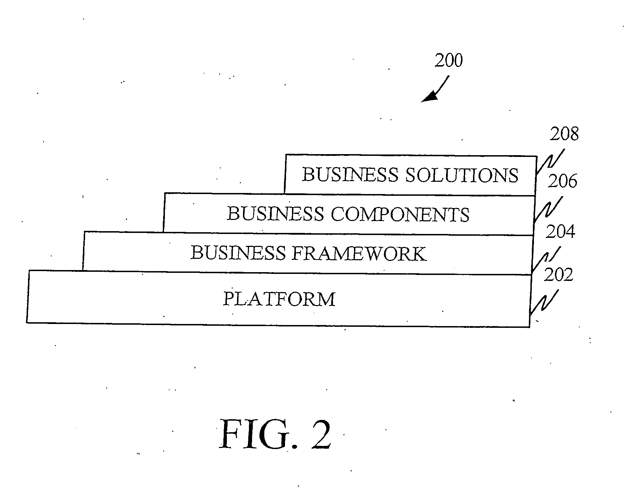

FIG. 2 is a block diagram of a higher level environment in which the present invention may reside. Environment 200 shows a tools and server platform 202, a business framework 204 in which the present invention resides, business components 206 and a business solution 208. Tools and server platform 202 illustratively provides a platform for services which allow applications to communicate and share data over a wide area network. The platform 202 can, for example, include tools and server systems to enable this functionality. Business components 206 illustratively include the functionality for business applications which are packaged together based on a developers interaction with business framework 204. Business components 206, for example, can range from general ledger and financial applications to sales force automation services and customer relation management applications. By writing business components 206 using framework 204, these components are extensible and can be utilized to serve the needs of multiple users, depending on what level of functionality and complexity is desired.

Each business solution 208 includes one or more applications. The applications are groups of business components presented through a user interface and individually deployed.

Business framework 204 is used by developers of business components 206. The business framework enables business applications in a productive, reliable and consistent fashion.

### BUSINESS FRAMEWORK OVERVIEW

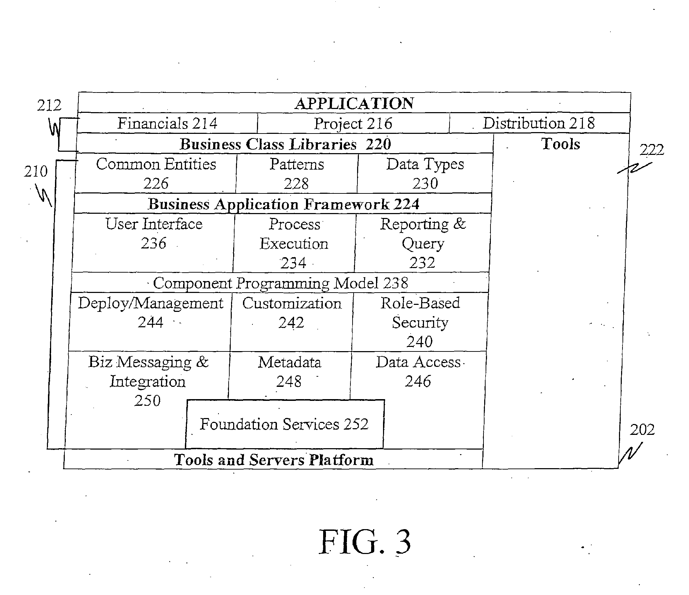

FIG. 3 illustrates a number of the principle subsystems of business framework 204. FIG. 3 illustrates framework 210 supporting an application layer 212 that includes a plurality of business components 214, 216 and 218. The business components include a financial application, a project application, and a distribution application. Framework 210 is also illustrated residing on platform 202.

Framework 210, itself, includes a set of business class libraries 220, a tools subsystem 222 and a business application framework 224. Tools subsystem 222 illustratively include a plurality of design subsystems for designing components, processes, reports and end user interfaces. Tools subsystem 222 also illustratively includes test services which can be used to test designed components as well as an application packager which is used to package the components into an application or solution.

Business class libraries 220 include common entities 226, patterns 228 and data types 230.

Two business applications often require a shared understanding of data so that integration can occur. For example, distribution, financials, and customer relations management all work with customer data. Business class libraries 220 thus provides a number of common entities 226 that contain the core properties of interest to most business applications. Applications built on framework 210 can extend these entities with scenario-specific properties and behavior, through customization (which is described below).

under one aspect of the present invention long running logical transactions can be constructed using combinations of short lived database transactions and compensating business logic (aka compensating transactions). In an ideal world, entity consumers want the ability to specify any arbitrary logical unit of work. The unit of work can simply wrap one update on a single entity property, or it could encompass an entire posting process. Because the unit of work is arbitrary, the consumer could dictate the boundaries as follows:
Enterprise.BeginUnitOfWork();
// Do anything the consumer wants...
// Create entities, Update entities, Delete entities
// Rollback the unit of work at any time
// Don't worry about multi-user contention issues
// Hold the unit of work open forever....
Enterprise.FinishUnitOfWork();

Unfortunately, this requirement for unlimited, arbitrary units of work is overly burdensome (if not impossible) for entity authors to support in a highly scalable multi-user fashion. Physical database transactions have low implementation cost to the entity author. However, supporting long-running logical units of work which span multiple database transactions is very expensive for the entity author. Any logical unit of work which lives beyond a single database transaction requires the entity author to support compensating transactions.

In an ideal world, all business logic would have associated business logic to support compensating transactions. Unfortunately, this effectively doubles the amount of business logic in the product -and is prohibitively expensive to implement. Thus there is a design tension against satisfying the entity consumer's ultimate desire for arbitrary logical units of work. Instead, a compromise is disclosed which allows consumers to meet their goals while putting some reasonable bounds on how much compensating business logic must be constructed by the entity author.

This compromise has an important impact on the programming model. Units of work now have limits and constraints. Programming models where the consumer may dictate an arbitrary logical unit of work are no longer supported. On the other hand, this does not mean that the entity author can implement any level of transaction support (including none). Minimum requirements are still imposed on entity authors. Otherwise entity consumers (including external parties like Independent Software Vendors) will have to research on a case by case basis what transactional support a given entity supports. This would be an unacceptable burden on entity consumers.

Accordingly, aspects of the present invention provide a compromise to this tension between entity authors and entity consumers. A standard is defined for logical units of work in the programming model. Entity authors must implement this level of transactional support, and entity consumers can rely on a certain level of support.

In order to better describe embodiments of the present invention, a brief set of definitions is given below.
Physical Transaction - A transaction which holds database locks for the duration of the transaction. A physical transaction may hold read and write locks (full ACID semantics), or only write locks (relaxed ACID semantics, ala "read committed"). Either way, a physical transaction enforces full isolation semantics on updated data by holding locks.
Logical Transaction - A transaction which does not hold database locks for the duration of the transaction. Specifically, this is a transaction model which relaxes isolation on updated data, while still maintaining the other properties of acid (the ACD parts).

One could call physical transactions "ACID transactions" and logical transactions "ACD transactions". But "logical" and "physical" are easier to comprehend than the acronym naming convention. A logical transaction model is built on top of a physical transaction foundation.
Transaction Manager - Transaction managers control the "lifecycle" of a transaction. Commercially available SQL Servers generally contain a simple transaction manager which can manage physical transactions on that a server (ala BEGIN TRAN, COMMIT TRAN). One transaction manager which can coordinate physical transactions across multiple servers is available from Microsoft Corporation of Redmond, Washington under the trade designation: Distributed Transaction Coordinator (DTC).
Compensating Transaction Manager (CTM) - Traditional Transaction Managers (like SQL Server or DTC) manage physical transactions. Long-running transactions need to span multiple physical transactions. When multiple physical transactions are involved, a simple transaction manager may not suffice. As used herein, this patent document refers to this type of transaction manager as a "compensating transaction manager". One commercially available product, available from Microsoft, is known as BizTalk Orchestration (BTO) and contains a compensating transaction manager which can manage logical transactions.

Business applications need to perform processing which spans multiple physical database transactions. However, a design for complex multiple-transaction support cannot be produced until the consumers for that model are defined. Consumers for complex multi-transaction scenarios are processes. In order to enhance clarity, these processes will be described as falling within one of two types, dynamic and static. However, this distinction is one of convenience and should not be considered as limiting embodiments of the present invention.

Dynamic Processes, also referred to herein as workflow, are asynchronous and require user involvement during the process execution (e.g. for approvals). The dynamic process flow editor can be made available to end-users and generally no "coding" is required to reconfigure the process. Dynamic processes will generally be used for long-lived transactions (where holding a single physical transaction for the duration is not feasible). Accordingly, dynamic processes require compensation. Finally dynamic processes employ compensation and generally need to publish intermediate progress information.

Static Processes, on the other hand, are generally synchronous. In some cases, static processes may have a delayed start, and run asynchronous to the caller. But once started, the static process runs to completion. It does not have a mechanism to pause or dehydrate itself for periods of inactivity. Static processes are typically found in "Batch Processing" scenarios such as year end close, post transactions, and revalue multi-currency transactions. Static processes typically require very high performance and generally do not require user intervention. Static processes require very little user reconfiguration. Such processes may expose "knobs" or other controls to tweak behavior. Static processes can throw events for extensibility if suitable code is written. However, in some cases batch processing still needs to span multiple database transactions.

Dynamic processes can use BizTalk Orchestration for logical transactions, in some instances. However, static processes will generally cannot use BTO. BTO is not an optimal choice for writing static processes. For example, static processes do not need BTO's intrinsic capability to reconfigure without writing code. Further BTO has performance that may be insufficient for the very high performance needs of enterprise batch processing.

It is important to note that the bifurcation of process descriptions into the two camps of "static" and "dynamic" is a consequence of current technologies. In the long term, there may be an environment which supports all the flexibility required of dynamic processes, while supporting the very high performance needs of static processes.

Business applications need to perform processing which spans multiple physical database transactions. Embodiments of the present invention generally achieve this by employing three new elements within the context of a business application development suite. These element include: Business Activities; Static Processes; and A Saga Manager.

One way to consider the Business Activity is to compare and contrast it with the known Business Entity. A Business Entity generally exposes business data in an object model and appears as a business document to the consumer. For example,
Order.OrderLines [1].Qty = 3.
A Business Entity is intuitive to the business developer and can be considered a "Smart" business document in that it supports rich validation and defaulting behaviors. A limitation of Business Entities is that the consumer's code is coupled to the entity object model and in some cases performance can be poor. Moreover, Business Entities generally require a whole entity to be pulled back in order to modify one property. Finally Business Entity modifications cannot be "undone" in a general manner after they are persisted because there is generally no compensation.

In contrast, Business Activity can be used to expose specific operations on business data. Further, consumer code is not coupled to the entity object model for example:
AllocateItem (ItemSku, ItemSite, Qty, UofM);
Business Activities can achieve very high performance and can wrap stored procedure calls or EP set operations. Business Activities can also support a prescriptive compensation interface.

Thus, Business Activities bring some new and useful tools to the business application developer's toolbox. Processes by their very nature exist to provide a framework for executing a set of process steps. Activities provide the implementation for a process' steps which need to perform operations on business data.

Business application developers invest a great amount of time and effort into the construction of batch processing functionality. This is especially true in enterprise systems. In enterprise systems, it is often the robustness and performance of these batch processes which determine if the solution can meet the customer's needs. Some believe that: "Either business logic runs in a single database transaction, or it is a workflow". This view does not recognize the impact of the role of batch processing in an enterprise system. One aspect of embodiments of the present invention is the recognition and rigor provided to the role of batch processing within a business application development framework.

It is important to note that static processes do not seek to provide the same level of flexibility as dynamic processes. Rather, static processes intentionally sacrifice some amount of flexibility in order to achieve much higher levels of performance than any general purpose workflow solution could provide.

Static processes support many of the concepts from "Mini-batch" set forth in a book by Gray entitled. Transaction Processing Fundamentals. Gray uses the term Mini-batch to describe a general approach to long-running batch processes. Further, a more specific form of mini-batch implementation is introduced as the Saga transaction processing model. The Saga transaction processing model was first published by Garcia-Molina and Salem in 1987. The algorithm is discussed in some detail in Gray's Transaction Processing Fundamentals book. In summary, a saga is a chained set of flat transactions with a defined compensation model. The compensation model is defined to be the inverse of the original execution path:
A₁, A₂, A₃, ... Aₙ₋₁, Aₙ | -Aₙ₋₁, ... -A₃, -A₂, -A₁
The vast majority of batch processing in business applications fits within the bounds of the mini-batch model. The term "bounds" is carefully chosen, as there are several sub-types of processing which fit in the overall model. The static process class disclosed herein will support the following sub-types:
Saga - The standard saga definition (presented above) is an ordered saga. That is, compensation is guaranteed to be executed in exactly the same order (but reversed) as the original execution sequence. Further, in case of failure the saga returns to the starting point.

Checkpointed-Saga (Mini-Batch)-Checkpointed-Sagas (also called "Mini-Batches" by Gray) are extremely important in batch processing. Consider a very, very large batch processing operation like year-end close. Year end close is an archival process which can move or delete hundreds of gigabytes of data. The strict Saga model says that a transaction failure rolls back the entire unit of work by executing the compensating transactions from N-1 all the way back to 1. This would be a poor choice for a very large batch process like year-end close. Oftentimes, batch processing operations are executed at night or over a weekend. The batch process typically runs for hours and must complete within the prescribed timeframe. It would be unacceptable for a year-end close to run for an entire weekend, encounter a failure and then rollback to the start. Checkpointed-Saga processes must be able to support a checkpoint model. A checkpoint indicates a successful completion of a sub-unit of work. Once a checkpoint is executed, the compensation chain is truncated and a future failure will not rollback the completed sub-unit of work.

The introduction of a Checkpointed-Saga requires an infrastructure to "restart" a static process. Thus, static processes which implement checkpointing must be idempotent. A static process restarted as a result of system failure must successfully "skip" the already completed units of work, thus insuring idempotent behavior.

Activities provide a compensation interface to "undo" committed changes to the database. However, the question remains: "Who is going to call the compensation interface"? What is needed is a transaction manager capable of managing atomic work which spans multiple physical transactions.

Every transactional system needs a transaction manager which controls the lifecycle of the business logic processing from beginning to end. The transaction manager insures that the results of the processing are atomic, consistent, isolated, and durable. A given transaction manager will typically allow the strict ACID model to be relaxed in favor of higher concurrency.

A transaction manager must always be in control of business logic updates. Of course, commercially available SQL Servers contain a transaction manager. Such transaction managers work well as long as all the business logic processing can run as part of a single physical database transaction. These transaction managers do includes various knobs and controls which allow reduced levels of isolation, especially on- the read side. These controls are helpful, and in fact, some products may run totally at the "Read Committed" reduced isolation level. However, as helpful as these reduced isolation levels are, locks must still be held on written records until the transaction commits.

If the transaction must span multiple physical database transactions, then the "built-in" SQL Server transaction manager is no longer sufficient. Long-running processing in a business applications cannot use a single database transaction. Instead, a transaction manager must be used which supports compensation in a rigorous manner.

As described above, BizTalk Orchestration (BTO) provides one possible choice for transaction management duties for long-running processing. The stereotypical examples of a long-running process is a workflow. BizTalk Orchestration is designed to provide the foundations for a workflow system. If workflow is really being implemented, then orchestration is an excellent choice. However, BTO only provides a compensating transaction manager. The business application must still provide the business logic for BTO to call. This business logic must implement an interface which exposes compensation business logic. This is exactly what a "Business Activity" as disclosed herein supplies.

It may seem as though a complete solution is simply using SQL Server for single database transaction processing, and BTO for multiple database transaction processing. However that is not the ideal solution. There is. significant need for a non-workflow oriented compensating transaction manager. There are many scenarios in business applications where multiple database transactions are needed for concurrency reasons, but where BTO is simply too unwieldy to leverage as a transaction manager. There are two primary issues: Performance and Workflow Baggage.

The Biztalk orchestration transaction manager requires all participants of the workflow to implement COM+ transactions. COM+ transactions sit on top of DTC, and DTC sits on top of SQL Server's basic protocol. As soon as DTC is invoked, a two-phase commit is running. This is generates a serious performance impact, as there are now a minimum of two logs (usually more), and many cross-process calls to implement the two-phase protocol. Performance tests show that using DTC is three to eight times slower than using base SQL Server "BEGIN TRAN"-type operations.

COM+ adds the overhead of making each object "context bound". Basically, COM+ needs the ability to intercept all method calls on the transactional object to start and commit transactions (at the method level) as required. This adds further overhead.

Performance analysis has shown that COM+ transactions impose more overhead (by themselves) than the entire work of reading and writing the database records. With this in mind, Entity Persistence is being re-architected to avoid the usage of COM+ transactions, in favor of basic SQL Server "BEGIN TRAN" commands.

Workflow baggage is another concern with using BTO as a transaction manager. While BTO is a powerful, flexible environment, such power comes with overhead. There are many cases where business logic runs for too long to live inside a single database transaction, but certainly does not fall into the traditional workflow stereotype.

Consider an example of a sales order. On creation, each sales order is assigned an ID. This ID is human-readable, and follows a template (e.g. SALESXXXXX). This first order is "SALES00001", the next is "SALES00002", etc.... The allocation of these identifiers is surprisingly difficult in a performant fashion. The only feasible way to handle the allocation of these identifiers is to create them in a sub transaction, and handle the filling of holes via a compensation model (in Gray's terms, this is relaxing the monotone requirement, but compensation keeps the algorithm readable and dense). The example requires a transaction manager capable of spanning multiple physical database transactions, but it is not a candidate for workflow\BTO. The action of allocating an order ID does not require any type of "reconfigurable workflow"; the action of allocating an order ID should not require the developer to create an XLANG schedule; nor should the action of allocating an order ID should not require an entire COM+ transaction. All that is really required is a very lightweight transaction manager. The overhead of COM+ transactions is neither needed nor desired. In many cases, two-phase commit overhead of DTC is also not needed or desired. Most cases will only be using a single SQL Server. The lightweight transaction manager can simply store its transaction context in the same database as the business logic uses, thus "piggybacking" on the single log.

To handle these cases, a new compensating transaction manager is implemented. The compensating transaction manager will be surfaced through the BusinessEntity class. Static processes will be preferably written in the C# programming language, inheriting from BusinessEntity and calling BusinessActivities. The compensating transaction manager inside the entity handles the physical transaction management, along with logging and clearing the necessary log records.

Activities are not executed "stand alone"; rather they are always a step in an overall saga. The saga forms a logical grouping of activities, so that multiple executed activities can be confirmed or aborted in a transactionally correct fashion. Even if the consumer only wants to execute a single activity, they still wrap the activity execution in a saga. This is important, as a single activity executed by the consumer might internally call many other activities in a nested fashion. So while the consumer only thinks they are executing a single activity, they are actually executing multiple activities which need to be confirmed or aborted in an atomic fashion. That coordination is provided using the saga.

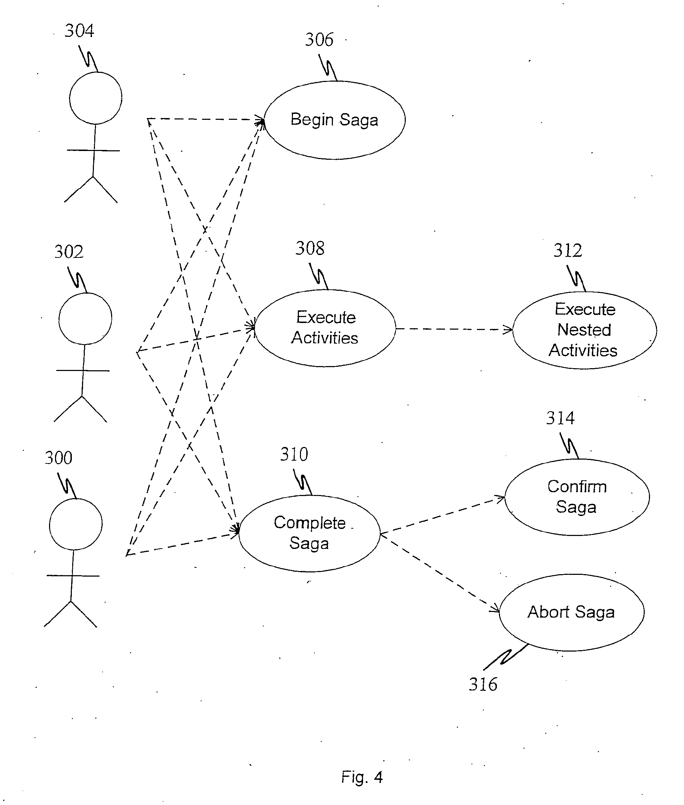

As illustrated in Fig. 4, there are essentially three types of activity consumers: dynamic processes 300 (aka workflow); Static processes 302, and Entities 304. At first, the inclusion of entities 304 in the list may appear odd. However, entities 304 do needy to be able to call activities. Activities are always a "step in a process", so somehow an entity needs to be able to have some aspects of process. Each activity consumer 300, 302, and 304 can begin a saga as illustrated at 306; execute activities as illustrated at 308; and complete a saga as illustrated at 310. Further, activities can also execute additional nested activities as illustrated at 312. Finally, the completion of a saga can be done by confirming the saga 314 or by aborting the saga 316.

Providing entities with at least some aspects of processes is accomplished by giving each entity a built-in "lifecycle process". Each entity graph starts a built-in process when it is instantiated, and completes the process when it is saved or deleted.

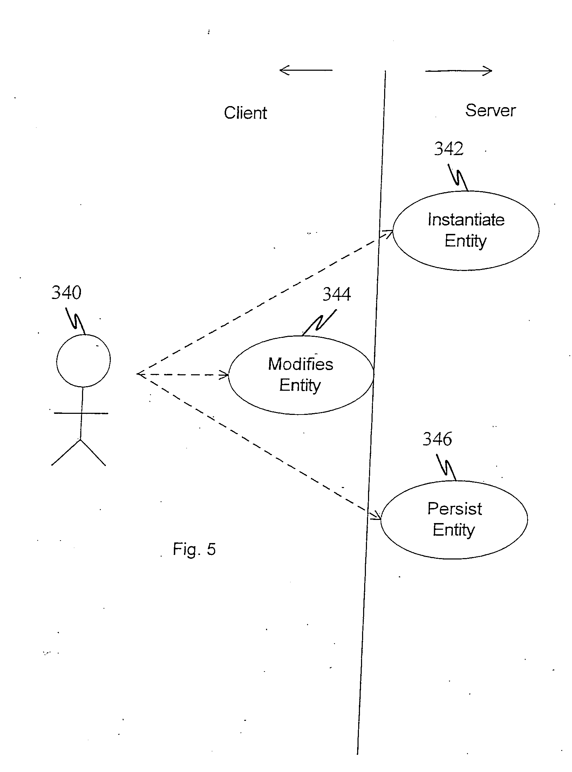

Entities and their associated virtual collections provide their consumers with a simple and consistent logical programming model illustrated in Fig. 5: the consumer 340 instantiates 342 an entity graph (via the entity's virtual collection) on the server; the consumer 340 interacts 344 with the entity graph on the consumer's client; and the consumer 340 saves- or discards (persists) 346 the entity graph on the server (via the entity's virtual collection).

This model is important since the introduction of anything into the programming model which breaks this rule with entity consumers must be avoided.

An exemplary programming model for consumers is:
order = orderVC.FindByID("TIMORDER");
order.Address.ZipCode = "58078";
order.OrderLines[1].Qty += 2;
orderVC. Save (order);
In this example, both changes (Zip code and Item Qty) are durably committed in an atomic fashion, thus keeping the database consistent. It is also important to support the "discard" case of the rules:
order = orderVC.FindByID("TIMORDER");
order.Address.ZipCode = "58078";
order. OrderLines [1]. Qty += 2;
order = null;
In this example, neither change must be persisted to the database.

In accordance with aspects of the invention an emissary-based approach naturally enforces a disconnected model. The read from the virtual collection returns an emissary (the entity). The consumer interacts with the (disconnected) emissary. When the consumer is finished, they pass the emissary back to the fiefdom via the Save() method on the virtual collection. Any and all changes to the emissary flow back to the fiefdom for persistence.

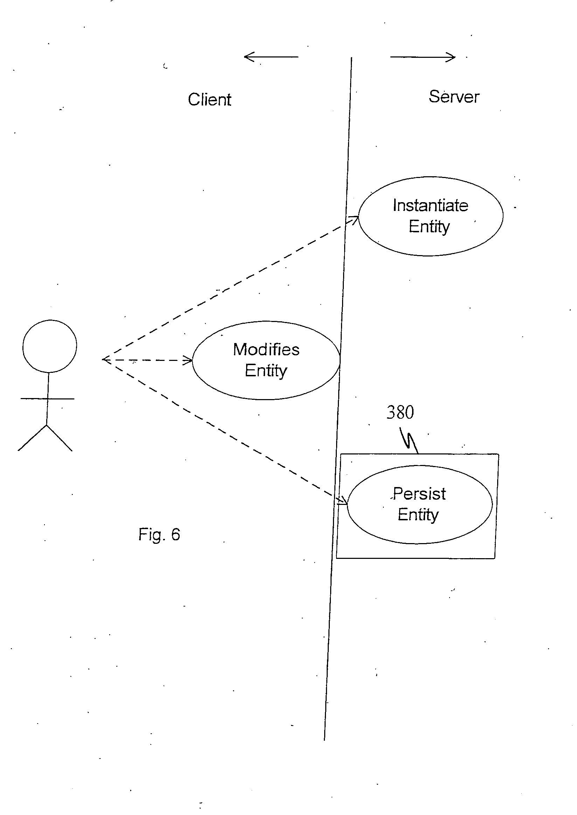

The persistence is a fundamentally atomic operation, as the entire entity flows to the server in one shot. The entire entity graph is persisted in one physical database transaction, as indicated by rectangle 380 in Fig. 6. Physical transactions can only exist on the server. Thus, a transaction rectangle such as rectangle 380 should never cross over to the client side.

While designs would be much simpler is all entities could be fully disconnected, things are generally more complicated. There are numerous cases where customer requirements mandate a more connected model to meet their business needs. For example, consider the classic "airline ticket reservation" scenario. A customer: (1) Works with a reservation agent to look for available seats on an airplane; (2) finds a seat; (3) provides credit -card and address information; and (4) the reservations is saved. In this scenario, it is fully expected that the selected seat will not be stolen by someone else while billing information is being added. This is the classic "lease" scenario.

One example of a use case is the airline ticket lease scenario. This scenario is "connected" because some of the consumer's interactions with the entity make calls to the server. In this case, the reservation of the seat will cause a round trip to the server. The reservation will update the database, and commit its results so that other reservation agents won't steal the reserved seat. Note that the all the activity lease operations are preferably totally transparent to both the entity consumer and the entity author. The entity just inherits from BusinessEntity, and then calls a seat lease activity which inherits from the BusinessActivity class. All the infrastructure associated with logging the leases and cleaning them up is automatic.

In accordance with an aspect of the invention, this scenario can be illustrated in the following exemplary entity consumer code: (simplified)

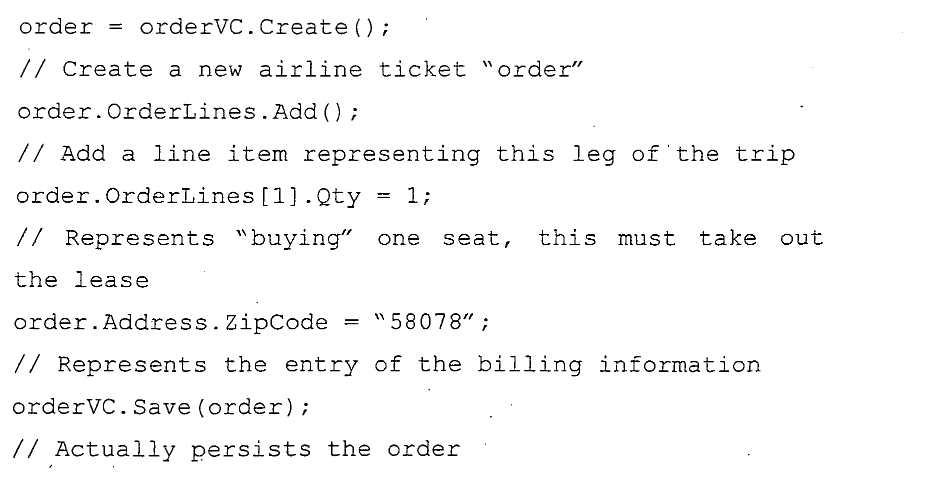

Note that this type of functionality is important to distributed systems. Distributed systems need to be based on some form of a fiefdom - emissary model. Each fiefdom cannot fully "trust" all the other parts of the distributed system. Fiefdoms can never allow unmanaged commits to fiefdom data by external parties (like the seat reservation). The saga manager allows applications employing embodiments of the invention to automatically get lease-based fiefdom interactions which are automatically confirmed when the overall unit of work enters the fiefdom.

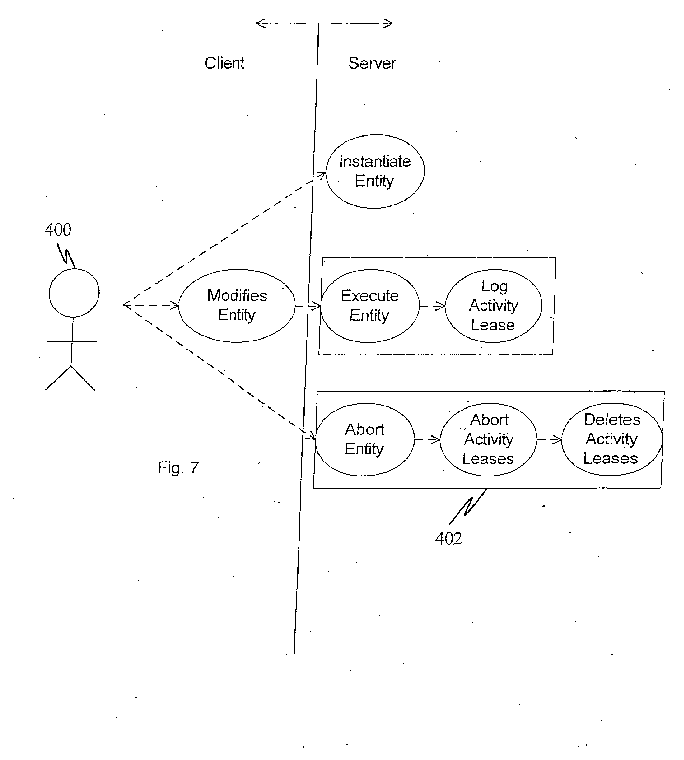

Recall that the programming model with the , entity consumer must not be broken. This consumer must not be allowed to make the database inconsistent. For example, if the client never saves the order (by doing something like setting order = null or crashing), there should be a mechanism for detecting these cases and freeing the seat lease. Fig 7 illustrates a use case showing a "well-behaved" entity consumer. The entity consumer 400 is well-behaved, because they call the Abort() method 402 on the virtual collection (added as part of this design). This allows the compensating transaction manager to immediately free any leases which the entity had reserved.

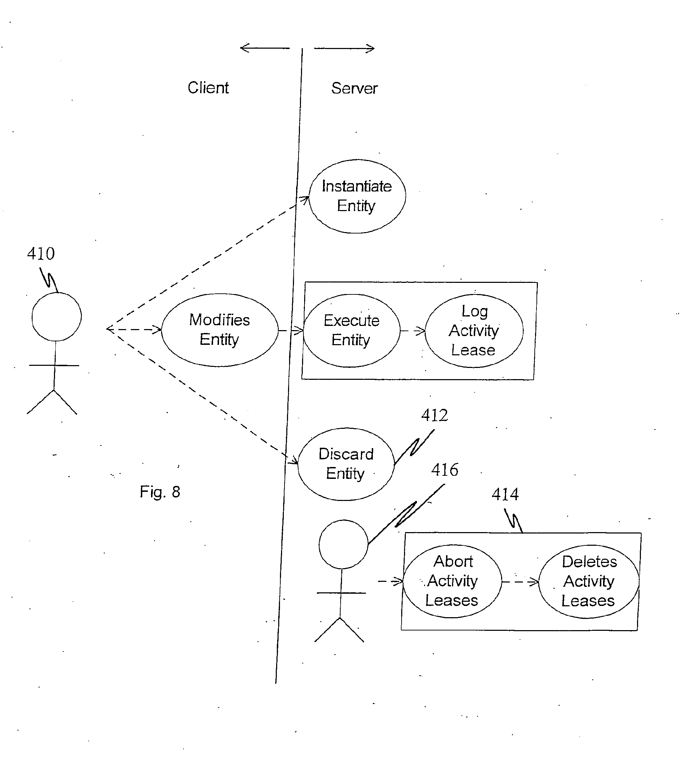

Fig. 8 illustrates a use case showing an "ill-behaved" entity consumer 410 which just discards 412 the entity without calling Abort 414. In this case, stale leases are detected using a timestamp approach. The "Cleanup Agent" 416 periodically scans the lease log table looking for very old leases to clean up and calls abort 414 upon such leases when detected. The cleanup agent 416 algorithm is left a solution framework "pluggable policy". The three classic choices preferably are: Heuristic Commit, Heuristic Abort, and Operator Intervention.

Entities are agile. In the typical usage pattern they leave the fiefdom and act as emissaries to consumers. When outside the fiefdom the entity may be fully disconnected, or the entity may implement a more connected model by calling activities which take out leases. However, at some point the entity needs to re-enter the fiefdom for useful work to happen. The entity can take as many leases as it wants when outside the fiefdom. However, those leases will all expire unless the entity successfully re-enters the fiefdom and is persisted.

There are numerous business logic activities which may need to occur when entities re-enter the fiefdom. Fiefdoms are typically distrustful of requests from the outside world. Fiefdoms will typically want to execute server-side business logic to validate the incoming emissary (the entity).

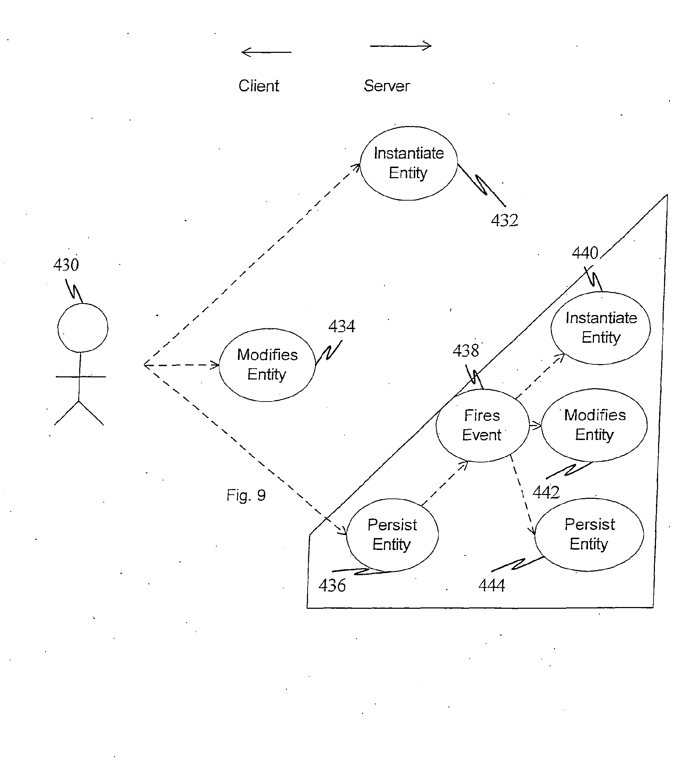

There are many cases where server-side entities will perform database updates. For example, the simplest case of server-side entity business logic is: Entity -> Entity. It demonstrates a rule of the logical transaction model: Persisting entities always use "requires" semantics. The first entity starts a physical transaction because one does not exist. However, the second entity enlists in the first entity's transaction, rather than starting anew. That is the definition of "Requires". Fig. 9 illustrates a use case where entity consumer 430 instantiates an entity 432; modifies the entity 434; and persists the entity 436. However, when the entity is persisted, it fires an event 438 that instantiates another entity 440; modifies the entity 442, and persists the entity 444.

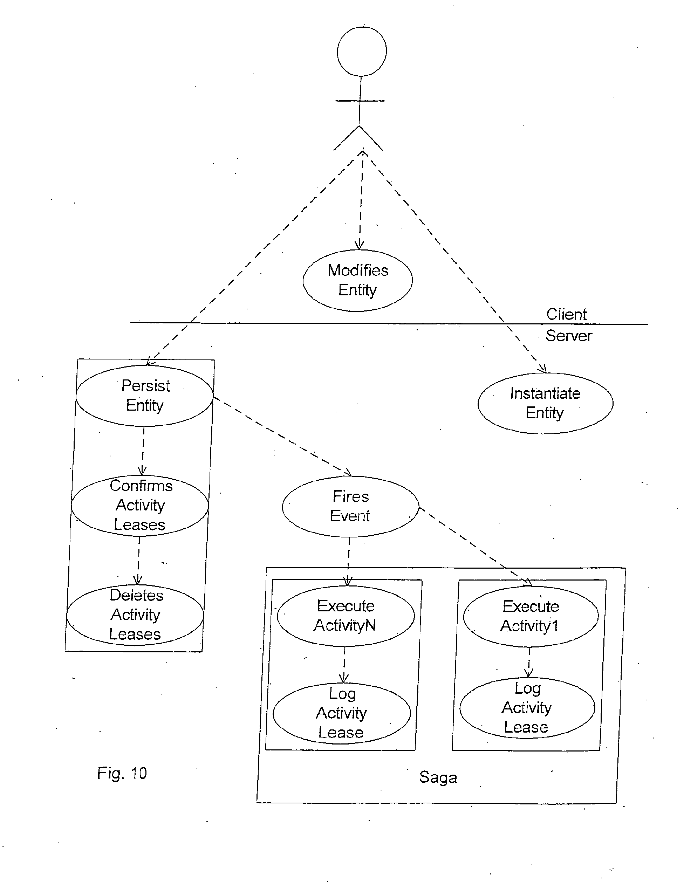

Fig. 10 illustrates a use case showing how activities executed during the server-side persistence of an entity compose together. This is basically the same case as when a connected entity interacts with an activity from the client. Note that this use case demonstrates the key transactional characteristics of Activities. Activities do not enlist in the entity's transaction. Activities will only enlist in another activity's transaction. (The execute activity started a new physical transaction, even though the entity was already being persisted). This is a highly desirable advantage. For example, consider a sales order. When a sales order enters the fiefdom, it must perform many activities. For example, each line item on the sales order must be allocated from inventory. The server-side business logic execution infrastructure will call a BeforeInsert or BeforeUpdate event on each line item, depending on if the line item is new or previously existed but was modified. The BeforeXX event on the sales order line will call an "AllocateInventory" activity for each line.

Having each of these allocation calls run in a separate database transaction is highly desirable. The alternative is to enlist the activity calls into the main persistence transaction. This will cause database locks to be held on all the inventory quantity available records while the entire order is persisted. This would hold locks for an unacceptable amount of time, causing significant concurrency problems.

The rules for how physical transactions compose between entities and activities have now been described:
Entities always compose in any running physical transaction ("Requires" semantics); and
Activities never compose with other transactions ("RequiresNew" semantics).

Note that nothing precludes providing a more flexible model for activity enlistment. However, it is difficult to allow an activity based "switch" for Requires or RequiresNew on a case by case basis. If there can only be one fixed behavior, it must be "RequiresNew". Otherwise both entities and activities would be Requires, and it would be impossible to build anything that ran in more than one physical database transaction. However, it is contemplated that a switch could be added to allow activities to declare an intent for Requires -or RequiresNew semantics. This would give developers flexibility to still use multiple database transactions, while still being able to group.

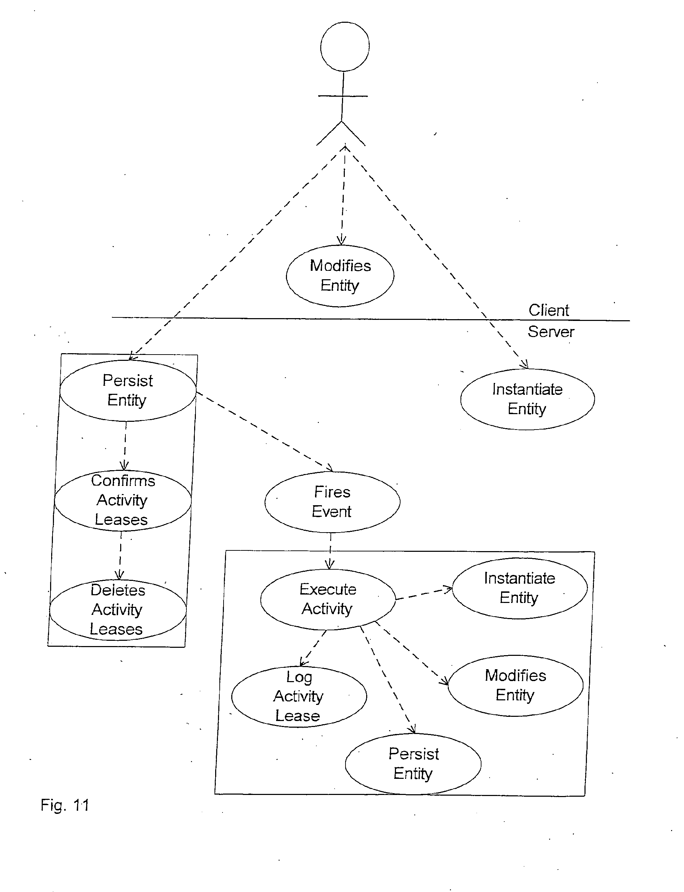

Entities always compose in the current transaction, if more than one is running. The following two use cases demonstrate the two possible outcomes. In the first example, shown in Fig. 11, the entity is persisted during activity execution, so the activity's transaction is current.

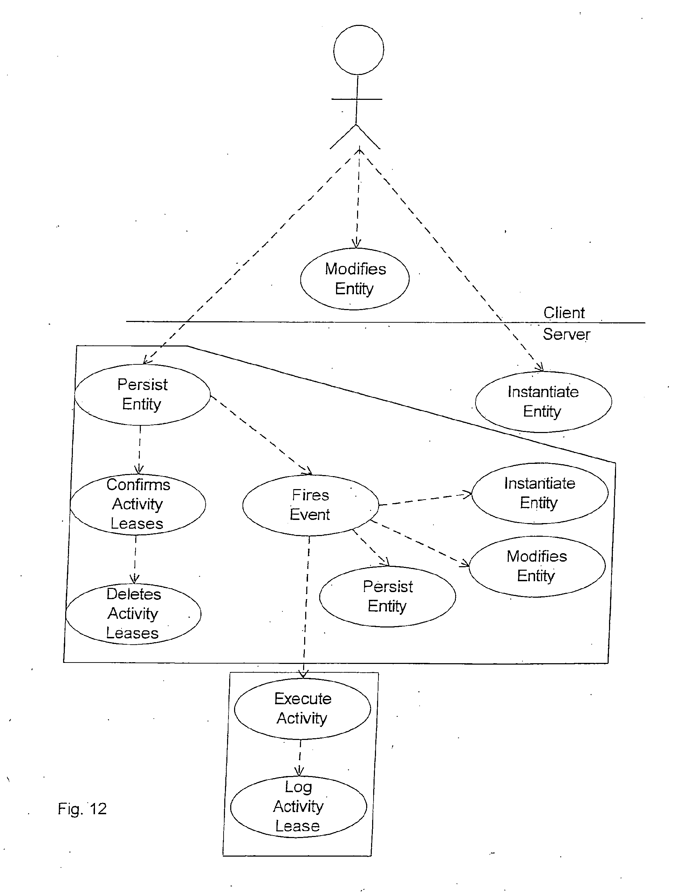

The second example shown in Fig. 12 is a case where code running in an event handler sequentially updates an entity, and then later calls an activity. In this case the entity is enlisted into the main entity's transaction. (But the activity is not, as activities are "RequiresNew").

How activities compose is an important design consideration. An important design point how nested activities get aborted and confirmed. The aborting and confirming of activities is preferably internally controlled by writing log records. A log record allows the system to "remember" to abort or confirm an activity. This is important as it impacts the programming model.

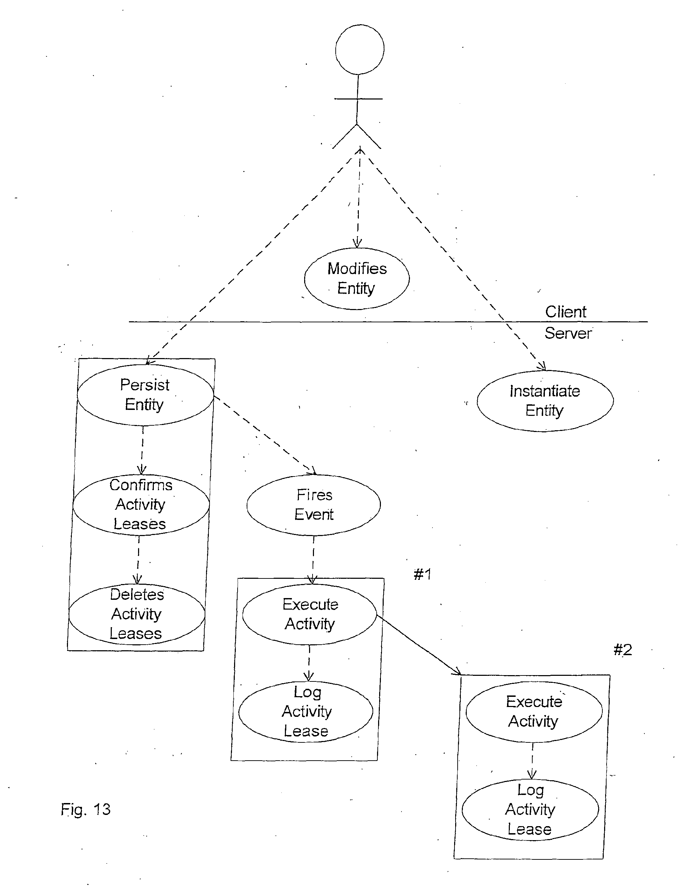

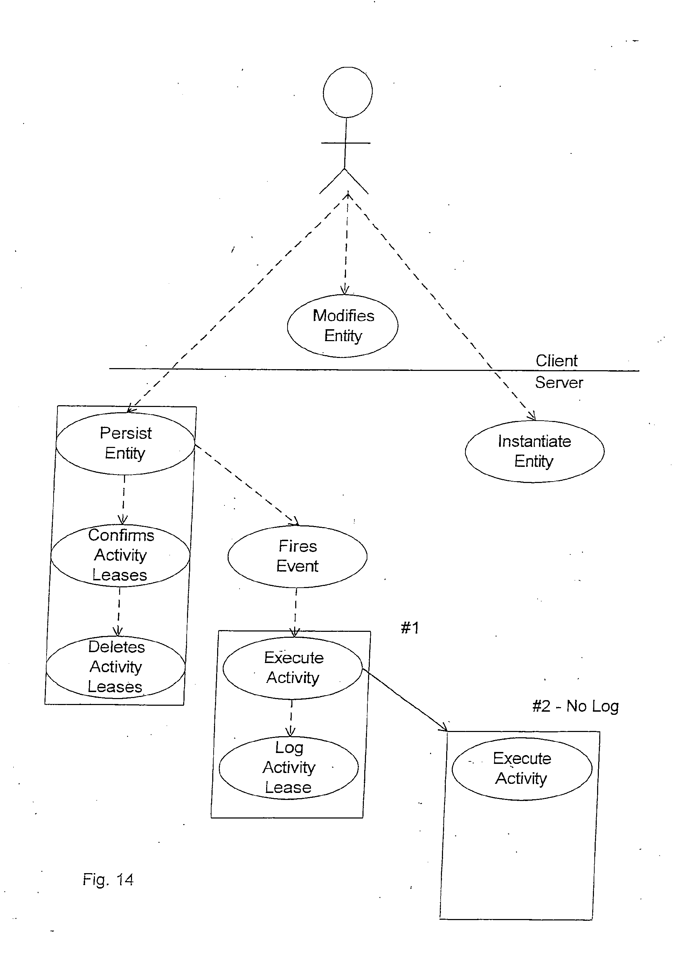

Figs. 13 and 14 illustrate use cases contrasting a design choice of using discrete logs, or using a parent log only. At first, both of these designs may appear reasonable. The differences between the two approaches manifests itself in how Abort() and Confirm() are handled. Choice #1 (Fig. 13) issues a separate log record for each activity. Choice #2 (Fig. 14) only issues a log record for the "parent" activity.

In case of system failure, the Saga Manager will call Abort() on both activities in choice #1. However, in choice #2, the Saga manager will only call Abort() on the first activity. This will impact what the code looks like for the first activity. Consider this example where activity "X" is the first activity that calls activity "Y":

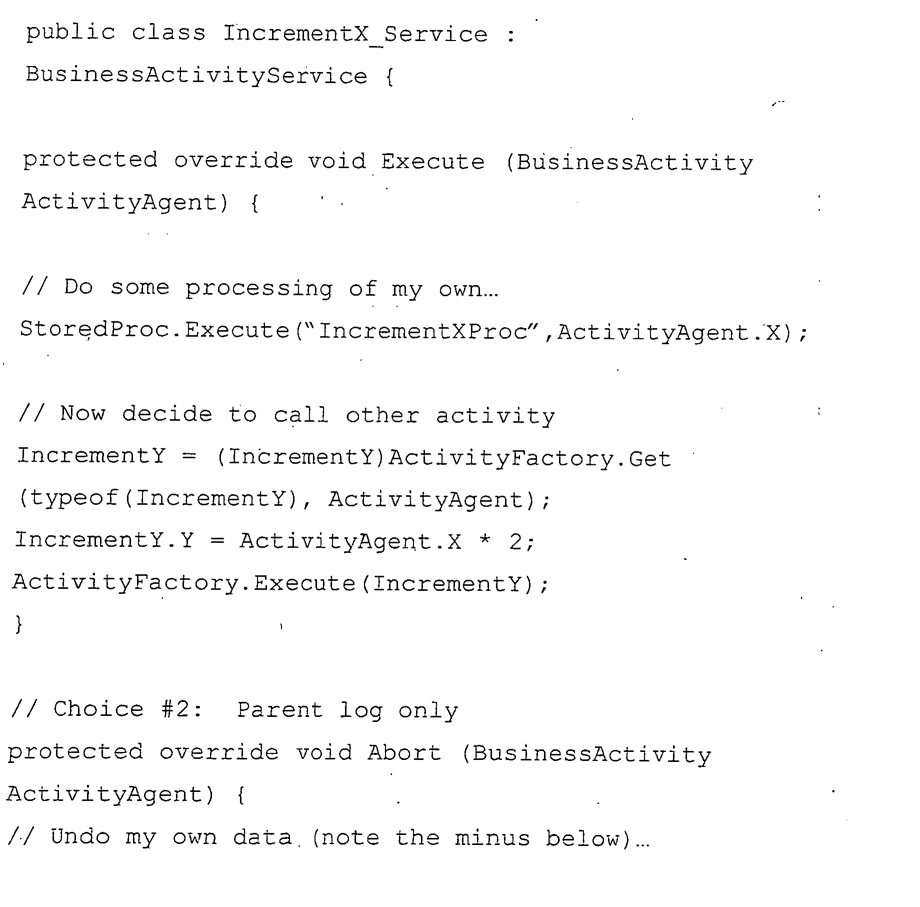

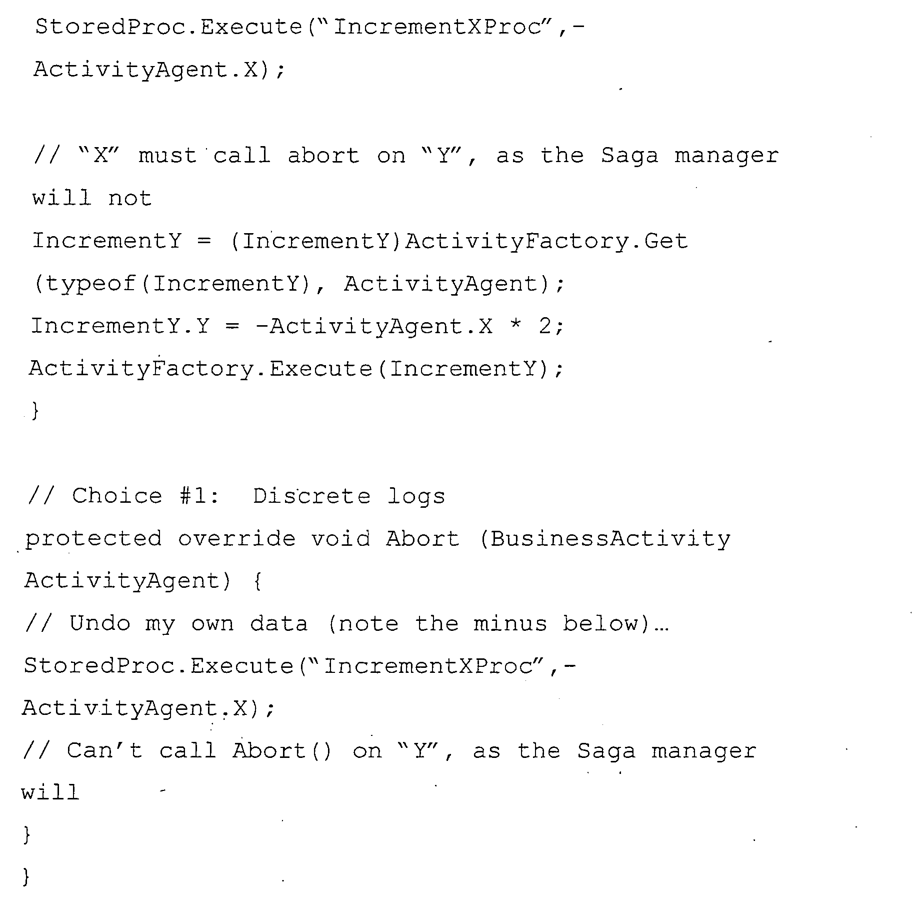

If choice #2 is used, then each activity will have to "pass-through" the Confirm() call to any activities it interacts with. Since it is anticipated that confirm will be rarely used, it seems error prone and burdensome to make application developers pass the call through. Further, it is a performance issue. The developer will always call Confirm(), when it is rarely used.

Accordingly aspects of the present invention preferably employ Choice #1, or discrete logs for a couple of reasons. First, from a programming model perspective, passing through Confirm() calls is may be considered by some to be too burdensome. But second, and more importantly, Choice #2 is not effective as presented. The diagram for choice #2 shows the second activity getting executed in its own transaction, without writing a log record. This is undesirable. For example, if the power were to go out right after activity #2 commits its changes to the database, but before activity #1 finishes the system would "forget" that activity #2 ran, and would not run its abort or confirm methods.

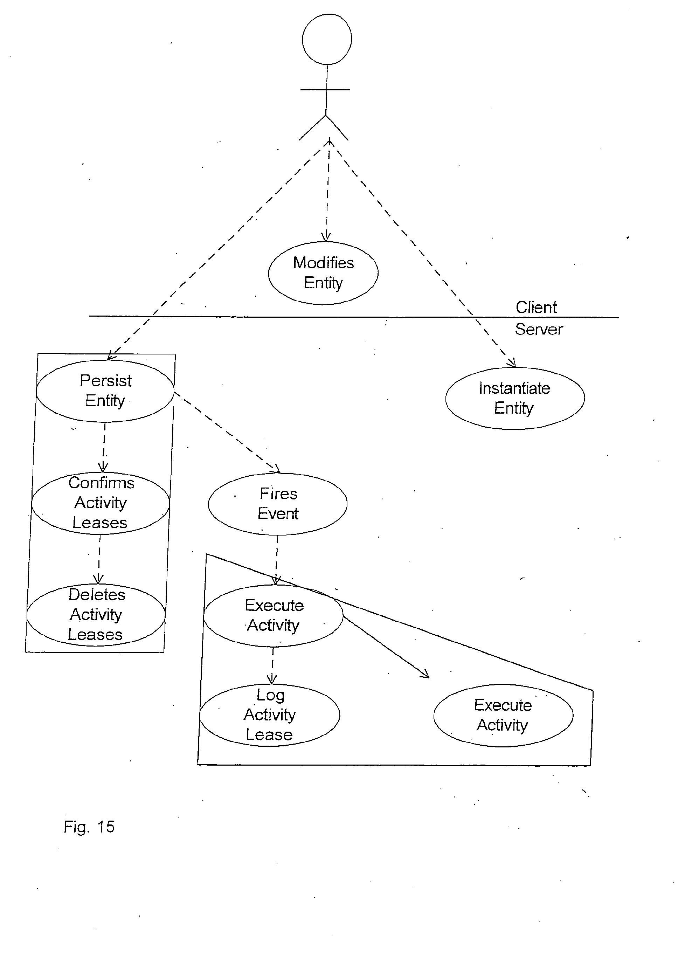

The only manner in which parent only logs can be supported is to force all child activities to run in the parent's transactional context as shown in Fig. 15. This effectively ties the hands of application developers to build complex static processes, and is deemed an unacceptable compromise.

Transactional correctness is ensured for embodiments of the present invention as long as there is compliance with a couple of rules. First any sub-transaction must have a log record written as part of the transaction. If this is not done, there is a risk that some committed work will be forgotten when the power goes out. Second, any sub-transaction must support compensation. The system cannot rely on SQL Server to rollback once a transaction is committed, so the sub-transaction must have "undo" option. This implies that any sub-transaction should have some form of a "root" activity to supply the compensation interface. Note, entities do not support a compensation interface. So any persistence of an entity must either be "under" an activity (then the activity supplies the compensation), or at the very "root". The entity consumer understands that once an entity is saved it cannot be "undone".

Dynamic processes (Workflows) implement an overall process made of many steps. Each step can be one of three things: (1) A TaskItem (User approval); (2) Another dynamic process; or (3) A piece of business logic. Activities are the implementation mechanism for workflow to execute a "business logic step". Note that it is anticipated that workflow will typically execute a single activity at a time. However, as discussed earlier, a single "root" activity may internally execute many other activities in a nested fashion. All of these activities need to be confirmed or aborted in a consistent fashion. With this in mind, workflow will always work through the saga manager. For each activity step, workflow will:
Call SagaManager.Begin() to begin a saga;
Execute Activities via the ActivityFactory (usually just a single activity); and
Call SagaManager.Confirm() to complete the saga.

Using the saga manager will ensure that any nested activity calls are handled properly.

Static processes and Entities have a great deal of similarities. Both need saga functionality. For example, the airline ticket case described above is an example where an Entity needs to take leases on seats. This is a case where the saga is driven by an entity, and the entity is located outside the server. Examples for batch processing scenarios have also been provided. These scenarios are driven by what have been called a static process. The static process in these cases runs server-side.

A number of requirements for both activities and entities will. be set forth below to provide a specific example of a framework that can be utilized to support long-running transactions in accordance with an embodiment of the present invention. The first set of requirements is directed to activity state transitions. The existence of log records, and operations on those log records (like when they get created or deleted) is considered an internal implementation issue which exists only to support the state transition requirements documented here. These requirements apply to anyone who executes activities via the saga manager: Entities or Workflow.

| **Req. ID** | **Commit** | **Requirement** |
|---|---|---|
| TRAN.010.010 | Commit | An activity must have a saga context to execute |
| TRAN.010.020 | Commit | Only activities in the "new" state can be executed. |
| TRAN.010.030 | Commit | An activity which throws an exception during execution remains in the new state and may be re-executed. Any data modifications during execution are rolled back. This is guaranteed to be atomic. |
| TRAN.010.040 | Commit | Executing an activity with no exceptions will cause the activity's data modifications to be committed, and the activity enters the "tentative" state. This is guaranteed to be transactionally atomic |
| TRAN.010.060 | Commit. | An activity is not required to implement any specific combination of execute, abort, and confirm methods. |
| TRAN.010.065 | Commit | If a method is no implemented by an activity, it is assumed successful for state transition purposes. |
| TRAN.010.070 | Commit | All activities that reach the tentative state are guaranteed to have either their confirm or abort method called. |
| TRAN.010.080 | Commit | The confirming state will confirm activities in the same order they originally executed. |
| TRAN.010.090 | Commit | If any confirming activity throws an exception, then all activities return to the tentative state, and the initiating save or delete operation is rolled back. This is guaranteed to be a transactionally atomic operation. |
| TARN.010.100 | Commit | If no confirming activity throws an exception, then all activities enter the confirmed state, and the initiating save or delete operation is committed. This is guaranteed to be a transactionally atomic operation. |
| TRAN.010.110 | Commit | The confirmed state is final. Once entering that state the activity is complete. |
| TRAN.010.120 | Commit | The aborting state will abort activities in the reverse order they originally executed. |
| TRAN.010.125 | Commit | Aborting an activity with no exceptions will cause the activity's data modifications to be committed, and the activity enters the aborted state. This is guaranteed to be transactionally atomic |
| TRAN.010.130 | Commit | If any aborting activity throws an exception, then all activities return to the executed state, and any data updates during the abort methods is rolled back. This is guaranteed to be an atomic operation. |
| TRAN.010.140 | Commit | The aborted state is final. Once entering that state the activity is complete. |

The next set of requirement are valid for any activity extension. Activities executed by entities and by workflow will preferably all adhere to the following requirements.

| | | |
|---|---|---|
| TRAN.020.010 | Commit | Before events will be fired via the EventBroker for each of the execute, abort, and confirm methods. |
| TRAN.020.020 | Commit | The Before events will allow the event subscriber to cancel the execution of the corresponding execute, abort, or confirm method on the activity. If there are multiple subscribers to the event, a request from one subscriber to cancel is sufficient to cancel the method execution. Implementation: Pass a "Cancel" parameter by reference. It will be initialized to false. If any subscriber wishes to cancel, they set the cancel variable to true. Note that some events may allow any later subscriber to set cancel back to false. That behavior will be allowed. |
| TRAN. 020.030 | Commit | After events will be fired via the EventBroker for each of the execute, abort, and confirm methods, if and only if: 1. The execute, abort, or confirm method did not throw an exception. 2. No Before subscribers threw an exception This follows the philosophy of requirement TRAN.040.080. Run the after event, even if one of the Before subscribers cancelled the base method. The logic is that the Before subscriber cancelled the base method because they wanted to replace its functionality. Still throw After events to all subscribers, even if someone did replace the base method. |
| TRAN.020.040 | Commit | Before and After events will be fired for each method regardless of whether the activity actually implemented the method. Implementation: The actual decision to fire events for the abort and confirm methods will be determined at execute time. As a performance optimization, do not write a log record if the underlying activity does not implement abort or confirm, and there are no subscribers to the abort or confirm methods. This will typically deliver proper behavior. However, it is possible that an activity executed with no subscribers, in which case do not write a log record. |
| TRAN.020.050 | Commit | Before and After events will pass the activity as an event parameter. The logical transaction context can be extracted from the activity by the event subscriber. The event subscriber can then participate in the saga. |
| TRAN.020.060 | Commit | Canceling execution of the execute, confirm or abort method does not impact the state transition of the activity. |
| TRAN.020.070 | Commit | An event subscriber throwing an exception will be treated as if the activity itself threw the exception. Before or After events may throw exceptions. |

Each entity graph will have a built-in "lifecycle process" which enables the entity graph to call activities. The following requirements document the rules for how this lifecycle process works.

| **Req. ID** | **Commit** | **Requirement** |
|---|---|---|
| **Saga Creation** | | |
| TRAN.030.010 | Commit | A writable entity shall always be assigned to a saga context on instantiation. |
| TRAN.030.020 | Commit | Calling Create() or singleton Find() on the virtual collection returns a root entity which is always assigned to a new, unique saga context. |
| TRAN.030.030 | Commit | Calling a Find() method which returns a collection returns a collection of root entities which are each assigned to separate saga contexts. |
| TRAN.030.040 | Commit | An entire entity graph is always assigned to the same saga context. (Root entity + dependents) Note this includes: 1. Both singleton and collection compositions 2. Both eager and lazy-loaded dependents. |
| TRAN.030.050 | Commit | A read-only entity is never assigned a saga context. Ramification: Read-only entities cannot call activities, unless they take a saga context as a parameter from their consumer. |
| TRAN.030.060 | Commit | A saga context is unique to a given entity graph. E.G. Two entity graphs never share a saga context. |

| **Saga Completion** | | |
|---|---|---|
| TRAN.040.010 | Commit | A call to the abort method on the entity graph's virtual collection will trigger all tentative activities to enter the aborting state. |
| TRAN.040.020 | Commit | A successful save or delete of an entity graph will cause activities in the tentative state to enter the confirming state. |
| TRAN.040.030 | Commit | An unsuccessful save or delete attempt on an entity graph will cause activities to remain in the tentative state. |
| TRAN.040.040 | Commit | Any exceptions thrown during the confirming state cause all activities to return to the tentative state, and the entity virtual collection operation which triggered the confirmation (save or delete) is rolled back. |
| TRAN.040.050 | No Commit | The application framework shall provide a "cleanup agent" to handle transitioning activities associated with discarded entities from the tentative state to the aborted state. |

Logical transaction contexts are unique to an entity graph. However, higher level scenarios like static processes will find it useful to be able to track and group activity operations across multiple entity graphs. Thus, the concept of "Logical Transaction Groups" is introduced. Logical transaction groups allow activity operations which span multiple logical transaction contexts to be grouped. The logical transaction context contains a Guid which represents the "group" that this entity graph belongs to. Requirements for Logical Transaction Groups are as follows.

| **Req. ID** | **Commit** | **Requirement** |
|---|---|---|
| TRAN.050.010 | No Commit | A writable entity shall always be assigned to a logical group ID on instantiation. |
| TRAN.050.020 | No Commit | If a logical transaction context (from another entity) is in effect, the logical group ID is used from that context. Example: A server-side entity is instantiating a second entity. Or a level of indirection might be in play. An entity might have called an activity which is now instantiating an entity. The original entity passes its logical transaction context to the activity. The activity basically "impersonates" the entity. |
| TRAN.050.030 | No Commit | If no logical transaction context is in effect during entity graph instantiation, then a new group ID is generated. |
| TRAN.050.040 | No Commit | Logical group IDs are guaranteed to be unique (Guid) |
| TRAN.050.050 | No Commit | The logical group ID is flowed with the logical transaction context. |
| TRAN.050.060 | No Commit | The SagaTransactionMangerLogVC can return a collection of activities in the tentative state for a specified logical group ID |
| TRAN.050.070 | No Commit | The Saga Manger can perform other operations on groups like aborting or confirming all activities in the tentative state for a specified group |

Finally, there a re a pair of general activity rules. They are as follows.

| **Req. ID** | **Commit** | **Requirement** |
|---|---|---|
| TRAN.060.010 | Commit, | The execute method on an activity shall return an object |
| TRAN.060.020 | Commit- | The execution of an activity shall respect the Agent "IsValid" method |

One important object of embodiments of the present invention is to provide a prescriptive architecture where application developers who focus on the business domain be assisted in their technical decisions. With this in mind, this complex transactional problem is exposed via the framework in a rational programming model. This is accomplished with the following programming model: 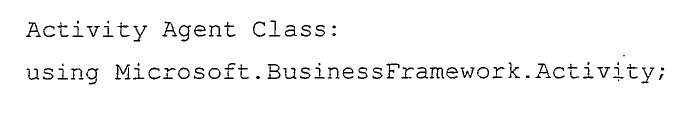 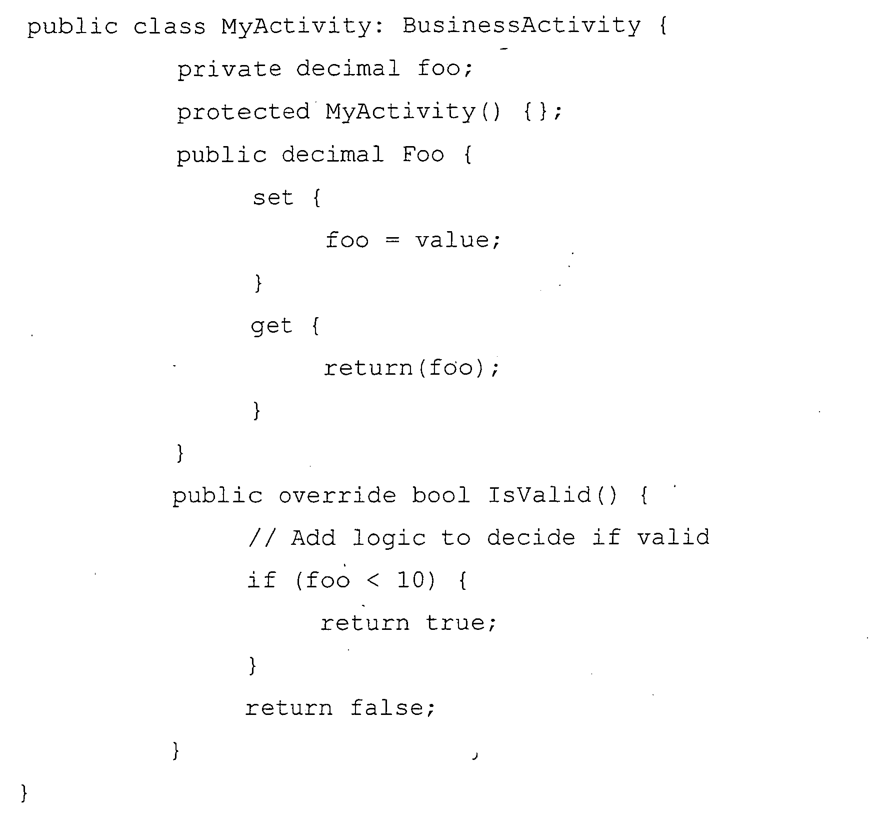 Activity Service Class:
using Microsoft.Business Framework.Activity;
public class MyActivityService:

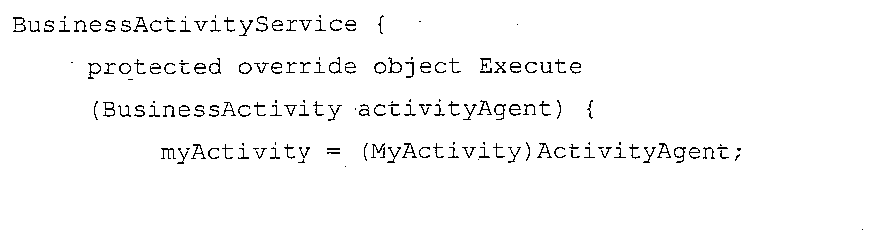

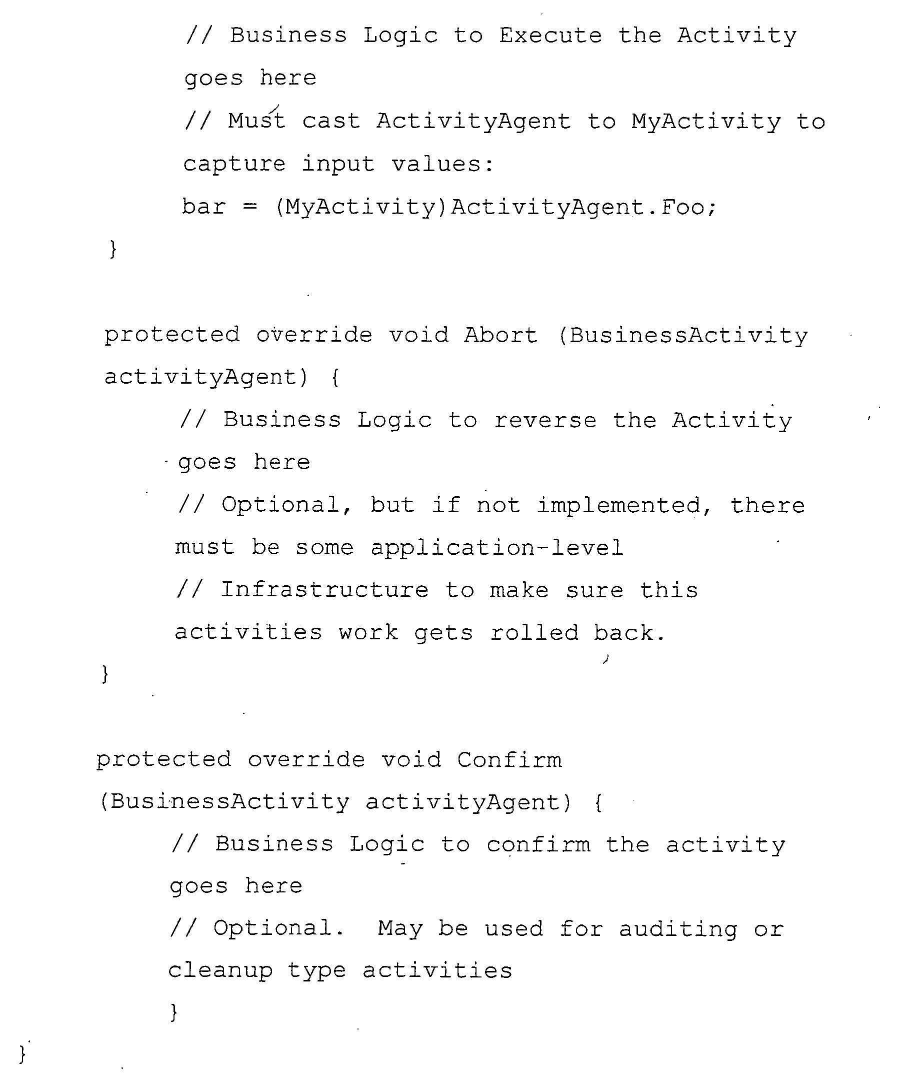

Within the Execute() method, the activity author may perform just about any operation they want: Entity CRUD (Create, Read, Update, Delete), Entity SetOps, or call a Stored Proc. Return values are passed back via the "object" return value of the Execute() method. The "needsConfirm" and "needsAbort" parameters are a performance optimization which enables the suppression of log records. If the activity indicates that it does not need confirm or abort notification, the saga manager does not need to write a log record for this activity. Note, however, that is log record is still written if there is a subscriber to the confirm or abort methods for this activity.

The programming model is also supported in part by the provision of an Activity Factory. 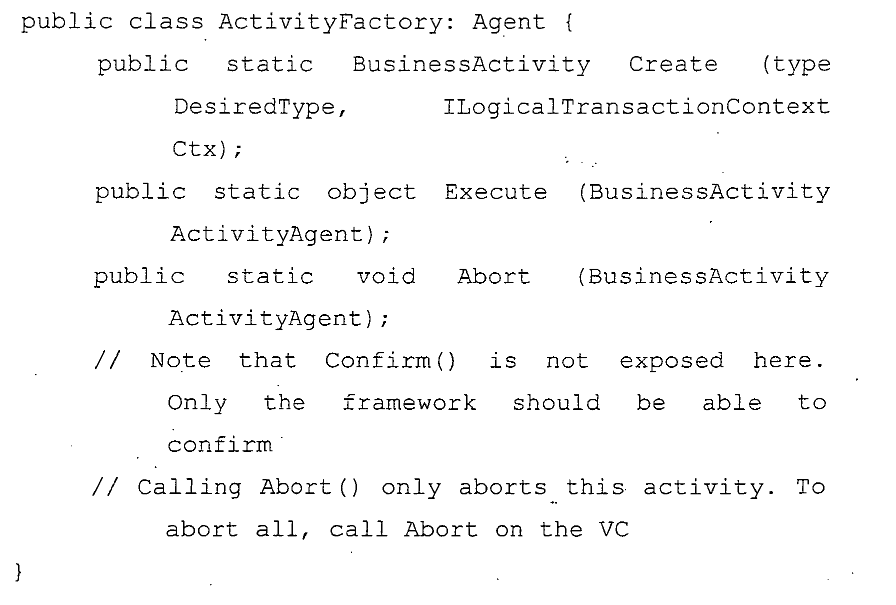 Activity Consumer (Entity calling Activity):

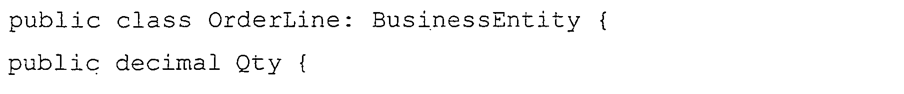

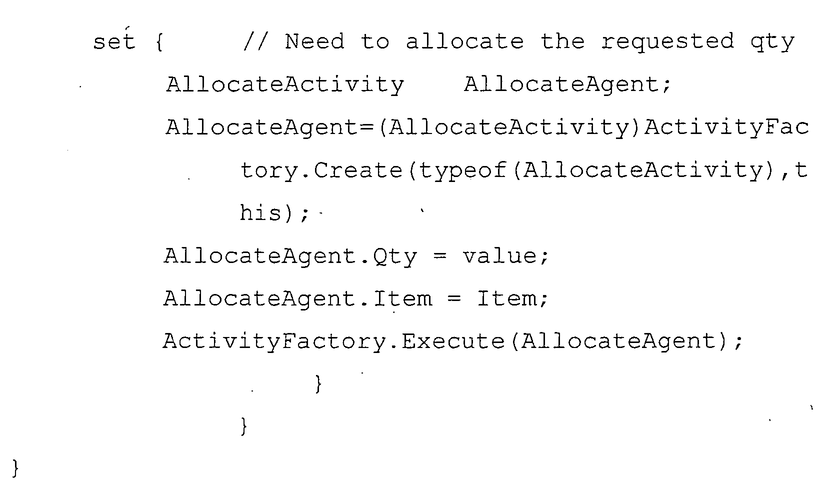

Note that this programming model is a synchronous model (request-response). In additional embodiments, a Message Service Broker can be used to introduce a message-based asynchronous model for interacting with Activities from Entities.

However, even once an asynchronous model is used; it is believed that there will still be value in a synchronous API as well. Asynchronous models intrinsically add complexity to the programming model by necessitating a callback driven model-. An Entity author can decide on a case by case basis to use synchronous or asynchronous.

Consider the airline seat reservation problem as an example. Given the choice of synchronous or asynchronous, the entity author would probably choose synchronous for this application. If the entity can be connected, then a lease can be taken. If the airline server is off-line, then it is probably preferable that the synchronous seat reservation call fail so the user could be notified.

The alternative would be to silently queue up the seat lease request and execute it later. That would not be as advantageous, as the main ticket reservation would have likely been completed by that time and the customer long-gone.

Activities can also be chained, meaning that activities can call other activities. An example is set forth below.
Activity Consumer (Activity calling Activity) :
public class MyActivityService:

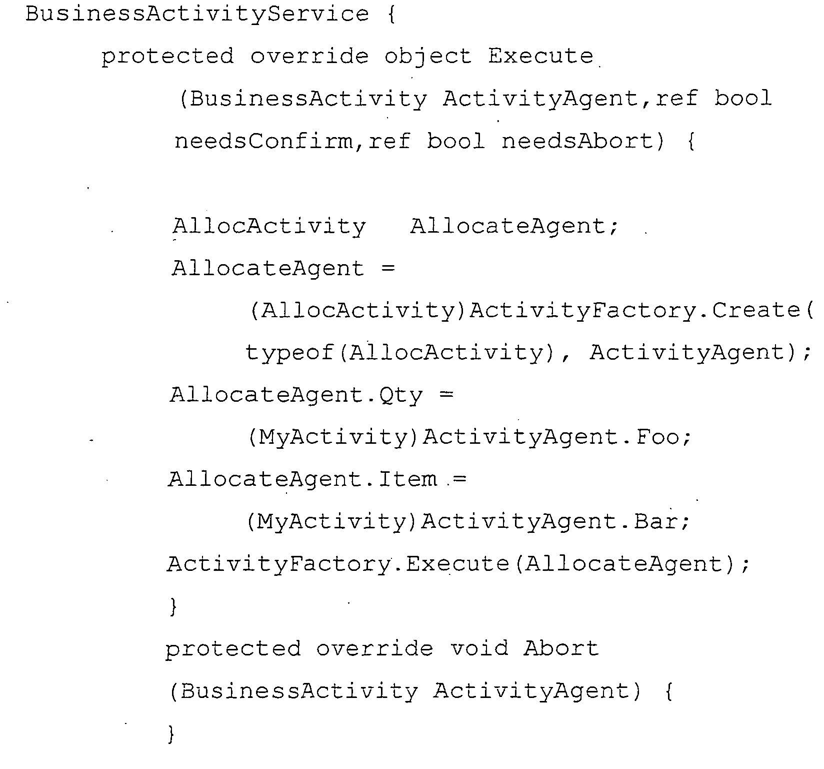

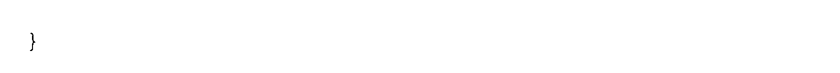

To construct an activity, a logical transaction context is supplied to enlist the activity into. In simple cases, this logical transaction context comes from an entity. However, once an activity has been constructed with a given logical transaction context, that activity can pass the context on to other activities.

Embodiments of the present invention preferably use -three interrelated subsystems to implement long-running transaction management using business activities. These subsystems include, the BusinessActivity Subsystem, the SagaManager Subsystem, and the ActivityManagement Subsystem.

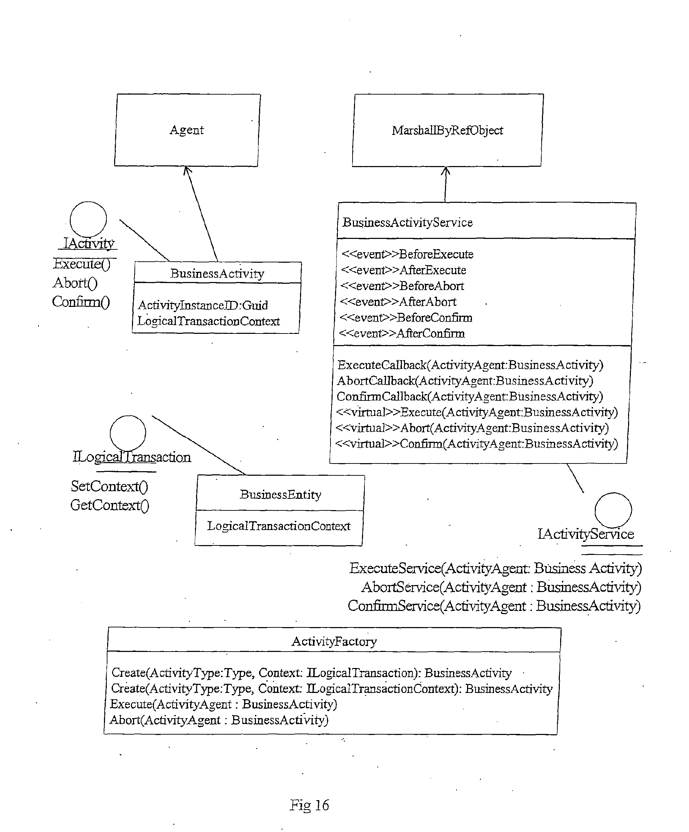

The BusinessActivity Subsystem is illustrated in Fig. 16. Business activities are always associated with an entity graph. The activity is associated with an entity graph by passing a logical transaction context into the ActivityFactory.Create() method. This logical transaction context may be supplied by an entity or an activity, as both implement the ILogicalTransaction interface.

The business activity preferably implements a Agent\Service pattern. The ActivityFactory preferably implements factory semantics. It is called "Factory" rather than "VirtualCollection", because it only creates (singleton) activities and has no "find" or "save" semantics.

BusinessEntity is included on the model in Fig. 16 to indicate that the entity is the holder of the logical transaction context.

The proliferation of ExecuteXXX, AbortXXX, and ConfirmXXX methods on the BusinessActivityService class is provided to avoid a direct call from the activity to the business logic on the service. Instead, "hooks" relate items in the base class to setup transactional contexts, write log records for tracking activity state, and firing extensibility events.

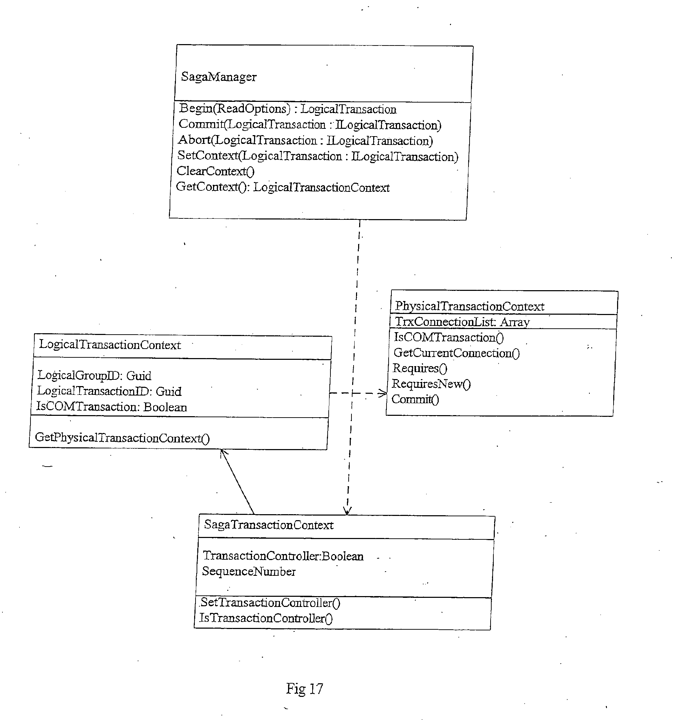

The SagaManager subsystem illustrated diagrammatically in Fig. 17 and is responsible for linking activities to entities. Activities executed within the context of an entity graph form a saga. The creation of a new entity graph begins a saga. The EntityBroker class will invoke the SagaManager.Begin() method to create a logical transaction context. The saving or deleting of an entity graph completes a saga. The EntityBroker class will call SagaManager.Commit () to complete a saga. The aborting of an entity graph aborts a saga. The EntityBroker class will call SagaManager.Abort () to abort a saga.

The logical transaction context manages physical transactions. Business activities may sometimes need to span more than a single database transaction. Thus, maintenance of a pool of connections with a proper lifecycle is required. The logical transaction context fulfills this need.

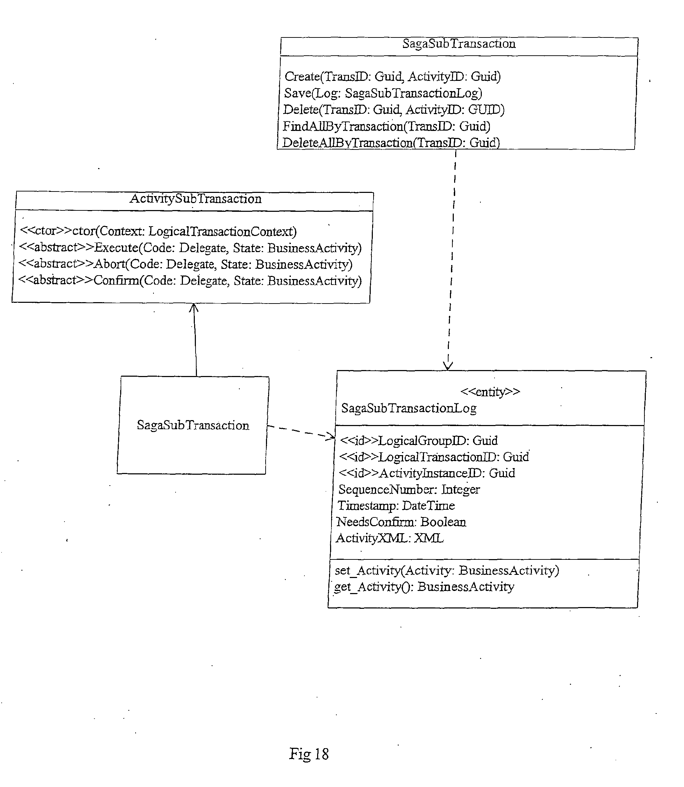

The ActivityManagement Subsystem is illustrated in Fig. 18. The ActivityManagement subsystem manages the execution of activities. While the actual business logic code for the activity is part of the BusinessActivityService class, the execute method generally cannot be simply run and completed. Entity-based Sagas require special "setups" before and after an activity is executed. This ensures that the proper transactional context is established, and also allows for any special logging needs.

With this in mind, the BusinessActivityService class actually delegates to the ActivitySubTransaction to execute an activity. In some cases, this allows a COM+ "Requires" transactional context to be setup. For entity-based saga's, the SagaSubTransaction class sets up the proper transactional context (may be SQL Server connection based or COM+ "RequiresNew"). The SagaSubTransaction class also writes log records to ensure that the proper commit and abort methods are called as the activity changes state.

Although the present invention has been described with reference to particular embodiments, workers skilled in the art will recognize that changes may be made in form and detail without departing from the spirit and scope of the invention.

## Claims

1. A method of generating a computer implemented business process, comprising:
passing a logical transaction context to an activity factory to instantiate a business activity with the logical transaction context; and
executing at least one event associated with the business activity within the logical transaction context.

2. The method of claim 1, and further comprising passing the logical transaction context to the activity factory to generate an additional business activity having the logical transaction context.

3. The method of claim 2, wherein the first and second business activities for an activity chain.

4. The method of claim 1, wherein the logical transaction context spans multiple physical transactions.

5. The method of claim 1, wherein executing the at least one event associated with the business activity occurs on a server.

6. The method of claim 1, wherein the business activity also takes an activity instance identifier.

7. The method of claim 1, wherein the business activity is instantiated by an entity.

8. The method of claim 1, wherein the business activity is instantiated by a static process.

9. The method of claim 1, wherein the business activity is instantiated by a dynamic process.

10. A data structure for managing multiple physical transactions as a logical transaction, the data structure including:
a first identifier relative to a logical group identification;
a second identifier relative to a logical transaction identification; and
wherein the data structure is passable to an activity factory to generate business activities.
